# FASCICULE DE BREVET EUROPEEN

(11) **EP 4 160 030 B1**
(45) Date de publication et mention de la délivrance du brevet: **10.07.2024**
(21) Numéro de dépôt: 22198892.6
(22) Date de dépôt: 29.09.2022
(51) Int. Cl.: F16C 19/10, F16C 33/78, B60G 15/06

(54) **BUTÉE TOURNANTE DE SUSPENSION POURVUE D'UN JOINT D'ÉTANCHÉITÉ ET DE RETENUE FRETTÉ**
DREHFEDERANSCHLAG MIT FRET-DICHTUNG UND -RÜCKHALTUNG
ROTARY STOP FOR A SUSPENSION WITH SHRINK-FIT SEALING AND RETENTION

(30) Priorité: 30.09.2021 FR 2110338
(43) Date de publication de la demande: 05.04.2023
(73) Titulaire: NTN Europe, 74000 Annecy (FR)
(72) Inventeur: BAUDU, Alexandre, 74010 Annecy Cedex (FR); BONNAUDET, Aurélien, 74000 Annecy (FR); CAMPART, Anthony, 74150 MARCELLAZ-ALBANAIS (FR); POURROY-SOLARI, Vincent, 74230 THONES (FR)
(74) Mandataire: Alatis

(56) Documents cités:
- EP-A1- 3 626 486
- DE-A1- 102017 125 906
- DE-A1- 102018 110 461

## Description

### DOMAINE TECHNIQUE DE L'INVENTION

L'invention se rapporte à une butée tournante de suspension pour interfacer une spire supérieure de ressort hélicoïdal de suspension de véhicule avec la caisse du véhicule.

### ÉTAT DE LA TECHNIQUE ANTÉRIEURE

Dans le document EP 3 626 486 A1 est décrit une butée tournante de suspension pour une jambe de suspension de véhicule selon le préambule de la revendication 1, comportant un support inférieur formant une portée d'appui pour une spire supérieure de ressort hélicoïdal, un palier supporté par le support inférieur et un couvercle formant avec le support inférieur un logement pour le palier. Un joint annulaire est fretté sur le couvercle et présente des lèvres d'étanchéité qui viennent en contact glissant avec le support inférieur pour créer une étanchéité de protection du logement où se trouve le palier. Ce joint présente également un talon qui fait saillie radialement dans une gorge annulaire formée dans le support inférieur pour garantir une cohésion entre le couvercle et le support inférieur avant le montage de la butée tournante sur le véhicule. Cette solution est adaptée à un support inférieur réalisé en matière moulé avec des pièces de moule mobile dans un plan radial par rapport à l'axe de révolution de la butée tournante. Si le support inférieur est réalisé par un procédé de moulage axial, il est nécessaire d'usiner la gorge annulaire, ce qui n'est pas acceptable d'un point de vue économique. Par ailleurs, dans l'hypothèse où le support inférieur est réalisé en matériau métallique, il est nécessaire de prévoir une finition particulière de la surface de contact glissant avec la lèvre d'étanchéité.

Une butée de suspension dont le support inférieur est réalisé en matériau métallique moulé axialement est divulguée dans le document WO 2021/018837. Pour permettre un accrochage entre le couvercle et le support inférieur de cette butée tournante, il est proposé dans ce document de fretter la rondelle inférieure du palier à roulement dans le support inférieur, et de prévoir sur cette rondelle inférieure une collerette qui vient se positionner dans une gorge formée dans le couvercle. Cette solution, qui n'intègre pas la fonction d'étanchéité mais uniquement la fonction de maintien de la cohésion de la butée tournante avant son montage sur le véhicule, a l'inconvénient de nécessiter des tolérances serrées et de générer des contraintes importantes à l'interface de frettage entre la rondelle inférieure du palier et le support inférieur. Pour réaliser la fonction d'étanchéité, il est préconisé, dans le document FR 3101279 A1, de surmouler ou de fretter sur le support inférieur un joint d'étanchéité présentant une lèvre d'étanchéité venant en contact glissant avec le couvercle. Le surmoulage ou le moulage d'un tel joint nécessite toutefois des formes complexes.

Le document EP3693625 A1 présente une butée de suspension tournante équipée d'un joint d'étanchéité et de retenue, comportant un corps de joint fixé au support inférieur d'une manière non précisée, et une lèvre qui vient en contact glissant avec une paroi cylindrique du couvercle pour réaliser une fonction d'étanchéité, le couvercle étant pourvu à l'extrémité de la paroi cylindrique d'un bourrelet en recouvrement radial avec la lèvre pour assurer le maintien axial entre le couvercle et le support inférieur. Le corps du joint est en contact surfacique avec le support inférieur le long d'une interface cylindrique et d'une interface annulaire plane. Une solution pour fixer le joint au support inférieur est le surmoulage, comme décrit par exemple dans le document FR 2 989 634 A1. Une solution théorique alternative serait un frettage, mais celui-ci nécessite des tolérances de fabrication très serrées au niveau de la paroi cylindrique du support inférieur en contact avec le corps du joint, pour éviter que des défauts de cylindricité de la paroi cylindrique se répercutent par l'intermédiaire du corps de joint sur la lèvre d'étanchéité et détériorent ainsi les performances d'étanchéité ou la durée de vie de la lèvre. Cette solution imposerait en outre au niveau du joint un renfort rigide pour assurer un frettage maîtrisé du fait de la faible section du joint et de la faible hauteur disponible pour le frettage.

On connaît par ailleurs par le document WO11103921 A1 une butée tournante de suspension présentant un joint monté mobile à la fois par rapport au support inférieur et au couvercle, ce joint ayant des moyens de retenue saillant radialement vers le couvercle et vers le support inférieur pour retenir le couvercle axialement par rapport au support inférieur. Mais la qualité de l'étanchéité réalisée n'est pas satisfaisante.

### EXPOSÉ DE L'INVENTION

L'invention vise à remédier aux inconvénients de l'état de la technique et à proposer une solution pour réaliser l'étanchéité, et de préférence la retenue axiale, entre un couvercle et un support inférieur de butée tournante de suspension, qui soit utilisable notamment avec un support inférieur dont les tolérances de fabrication sont peu précises, et soit compatible avec un moulage axial du support inférieur.

Pour ce faire est proposé, selon un premier aspect de l'invention, une butée tournante de suspension pour une jambe de suspension, la butée tournante de suspension comportant :
- un palier définissant un axe de référence et une direction axiale ascendante de la butée tournante,
- un support inférieur formant une portée d'appui tournée axialement à l'opposé de la direction axiale ascendante pour venir en appui contre une spire supérieure de ressort hélicoïdal, et une portée de frettage annulaire tournée radialement dans une direction radiale de référence,
- un couvercle formant avec le support inférieur un volume annulaire pour le palier, le couvercle comportant une jupe annulaire s'étendant axialement en regard et à distance de la portée de frettage,
- un joint d'étanchéité, monté sur la portée de frettage du support inférieur, présentant un corps et au moins une lèvre d'étanchéité annulaire en saillie depuis le corps dans la direction radiale de référence, vers la jupe annulaire, le joint d'étanchéité présentant au moins un premier ensemble d'une ou plusieurs premières lèvres de frettage élastiques faisant saillie depuis le corps vers la portée de frettage et frettées sur la portée de frettage de sorte à solidariser le joint d'étanchéité au support inférieur.

Par frettage, on entend ici un assemblage grâce à un ajustement serré garantissant dans les conditions de fonctionnement une solidarisation entre le joint d'étanchéité et le support inférieur.

L'aire de la surface de contact entre la ou les premières lèvres de frettage et la portée de frettage est relativement réduite - substantiellement plus réduite que l'aire de la surface du corps du joint en regard de la portée de frettage - ce qui permet d'obtenir une pression de contact élevée sans pour autant nécessiter un effort important au montage. L'élasticité de la ou des premières lèvres de frettage permet d'obtenir une pression de frettage maîtrisée même si les tolérances de fabrication concernant la portée de frettage sont importantes. Le corps du joint qui s'interpose entre la ou les premières lèvres de frettage et la lèvre d'étanchéité permet de limiter l'incidence de défaut de cylindricité de la portée de frettage sur le contact glissant entre lèvre d'étanchéité et la jupe.

De préférence, la ou les premières lèvres de frettage font saillie depuis une zone de jonction avec le corps, située axialement à distance d'une zone de jonction de la lèvre d'étanchéité avec le corps, de préférence dans une direction axiale opposée à la direction axiale ascendante. La distance axiale entre la zone de jonction de la lèvre d'étanchéité et la zone de jonction de la ou des premières lèvres de frettage permet d'augmenter la capacité de déformation élastique du corps de joint pour absorber les défauts de la portée de frettage en limitant leur répercussion sur la lèvre d'étanchéité.

De préférence, la ou les premières lèvres de frettage font saillie depuis le corps radialement dans une direction radiale opposée à la direction radiale de référence et axialement dans la direction ascendante. L'orientation de la ou des lèvres de frettage du premier ensemble facilite leur montage par insertion en force du joint sur le support inférieur dans la direction opposée à la direction ascendante, et s'oppose au retrait du joint dans la direction axiale ascendante.

Suivant un mode de réalisation particulièrement performant, la ou les premières lèvres de frettage ont une extrémité libre formant, en coupe axiale, un sommet d'angle vif supérieur à 20°, de préférence supérieur à 70° et inférieur à 90°, de préférence inférieur à 80°, le sommet ayant, en coupe axiale, une bissectrice faisant un angle de préférence supérieur à 10°, de préférence supérieur à 30° avec la direction axiale ascendante. Ces formes permettent d'augmenter la résistance du joint au retrait dans la direction axiale ascendante.

Suivant un mode de réalisation particulièrement avantageux, le couvercle comporte au moins une butée de retenue faisant saillie depuis la jupe annulaire dans une direction radiale opposée à la direction radiale de référence, la lèvre d'étanchéité étant en partie en recouvrement radial avec la butée de retenue, à distance de la butée de retenue dans la direction axiale ascendante. Le joint assure alors la fonction d'étanchéité et de retenue du couvercle avant montage de la butée tournante sur le véhicule.

Suivant un mode de réalisation, la lèvre d'étanchéité présente une section axiale en V, avec un sommet de V pointant dans la direction axiale ascendante. Cette forme assure une bonne flexibilité de la lèvre d'étanchéité et une bonne maîtrise de la pression de contact avec la jupe annulaire, donc du couple de trainée résistant à la rotation relative du support inférieur par rapport au couvercle autour de l'axe de référence de la butée tournante.

Suivant un mode de réalisation, le corps présente deux faces d'extrémité axiale opposées, de préférence annulaires, de préférence en recouvrement radial l'une avec l'autre. Ces dispositions permettent un empilement des joints lors de leur fabrication, de leur transport et de leur manutention, et avant leur montage sur des butées tournantes.

Suivant un mode de réalisation, la lèvre d'étanchéité est située axialement entièrement entre les deux extrémités axiales opposées du corps. En cas de déformation importante, par exemple lors du montage ou dans des conditions extrêmes d'utilisation, la lèvre d'étanchéité vient au contact du corps de joint, sur lequel elle peut reposer sans risque de détérioration.

L'invention est particulièrement adaptée à une butée de suspension dont le support inférieur est monobloc en matériau métallique léger. En particulier, le support inférieur peut être fabriqué par moulage axial, c'est-à-dire entre deux pièces de moule se séparant par translation parallèlement à l'axe de référence de la butée tournante, sans nécessiter de tiroirs latéraux pour des formes en contre-dépouille. Suivant un mode de réalisation, la portée de frettage présente une enveloppe cylindrique ou substantiellement cylindrique. Par substantiellement cylindrique, on entend ici une surface qui, aux tolérances de fabrication près, présente un angle de dépouille inférieur à 3°, pour permettre un démoulage axial du support inférieur sans dégrader la zone de frettage du joint.

Suivant un mode de réalisation, la portée de frettage est positionnée, par référence à la direction axiale ascendante, axialement au-dessus de la portée d'appui.

Suivant un mode de réalisation, le premier ensemble d'une ou plusieurs premières lèvres de frettage est constitué d'une première lèvre élastique de frettage annulaire.

Suivant un mode de réalisation alternatif, le premier ensemble d'une ou plusieurs premières lèvres de frettage est constitué d'une rangée de N premières lèvres présentant une symétrie de révolution d'ordre N autour de l'axe de référence, où N est un nombre entier supérieur ou égal à 2, et de préférence supérieur ou égal à 3.

Dans certaines configurations, la maîtrise de la déformation du corps du joint lors du frettage peut nécessiter des lèvres de frettage situées dans plusieurs plans perpendiculaires à l'axe de référence. Ainsi, suivant un mode de réalisation, le joint d'étanchéité comporte au moins un deuxième ensemble d'une ou plusieurs deuxièmes lèvres de frettage, situées axialement à distance de la ou des premières lèvres de frettage du premier ensemble. De préférence, la lèvre d'étanchéité a une zone annulaire de contact glissant ou incertain avec la jupe annulaire du couvercle, située axialement entre une zone de contact de frettage entre la ou les premières lèvres de frettage et la portée de frettage et une zone de contact de frettage entre la ou les deuxièmes lèvres de frettage et la portée de frettage. Suivant un mode de réalisation permettant un moulage du joint sans contredépouille, le premier ensemble est constitué de plusieurs premières lèvres de frettage réparties sur une même première circonférence du joint d'étanchéité, le deuxième ensemble est constitué de plusieurs deuxièmes lèvres de frettage réparties sur une même deuxième circonférence du joint d'étanchéité, et les deuxièmes lèvres de frettage sont sans recouvrement avec les premières lèvres de frettage.

Suivant un mode de réalisation, le support inférieur comporte une face annulaire de transition s'étendant depuis la portée de frettage radialement dans la direction radiale de référence et tournée axialement dans la direction ascendante, le joint d'étanchéité étant de préférence en appui annulaire étanche contre la face de transition, de préférence par une lèvre d'étanchéité statique ou un talon d'étanchéité statique. L'appui annulaire constitue une étanchéité statique qui vient compléter l'étanchéité dynamique entre la lèvre d'étanchéité et la jupe annulaire du couvercle afin de protéger le volume annulaire pour le palier entre le support inférieur et le couvercle.

Suivant un mode de réalisation, la lèvre d'étanchéité est en contact glissant avec la jupe annulaire. Alternativement, le joint peut être sans contact avec la jupe annulaire, l'étanchéité étant réalisée par la fermeture partielle de l'espace entre la portée de frettage du support inférieur et la jupe annulaire du couvercle. Le cas échéant, dans l'hypothèse où la jupe annulaire est pourvue d'une butée de retenue, de préférence annulaire, celle-ci peut constituer avec la lèvre saillante avec ou sans contact du joint d'étanchéité un chicanage contribuant à l'étanchéité.

Suivant un mode de réalisation, la direction radiale de référence est tournée radialement vers l'extérieur, la jupe étant de préférence positionnée radialement à l'extérieur du palier.

Suivant un mode de réalisation alternatif, la direction radiale de référence est tournée radialement vers l'intérieur, la jupe étant de préférence positionnée radialement à l'intérieur du palier.

Suivant un mode de réalisation, le palier comporte un chemin de guidage supérieur annulaire fixe par rapport au couvercle, un chemin de guidage inférieur annulaire fixe par rapport au support inférieur, disposé en regard du chemin de guidage supérieur, et des moyens interposés entre le chemin de guidage supérieur et le chemin de guidage inférieur pour permettre une rotation du chemin de guidage inférieur par rapport au chemin de guidage supérieur autour de l'axe de référence de la butée tournante. Ces moyens peuvent par exemple inclure un film de lubrifiant ou un patin annulaire en contact glissant avec le chemin de guidage supérieur et le chemin de guidage inférieur dans le cas d'un palier lisse, ou des corps roulants, le cas échéant logés dans une cage, et roulant sur le chemin de guidage supérieur et le chemin de guidage inférieur, dans le cas d'un palier à roulement. Le chemin de guidage supérieur peut être formé d'une pièce avec le couvercle ou sur une rondelle de guidage en appui sur le couvercle. Le chemin de guidage inférieur peut être formé d'une pièce avec le support inférieur ou sur une rondelle de guidage en appui sur le support inférieur.

De préférence, le joint d'étanchéité et de retenu est en matière synthétique, de préférence en matière plastique, notamment en polycétone (PK), ou en polyoxyméthylène (POM), de préférence sans armature.

### BRÈVE DESCRIPTION DES FIGURES

D'autres caractéristiques et avantages de l'invention ressortiront à la lecture de la description qui suit, en référence aux figures annexées.
[Fig. 1] La figure 1 illustre en demi-coupe axiale une butée tournante de suspension suivant un premier exemple de réalisation de l'invention.
[Fig. 2] La figure 2 illustre en perspective un détail d'un joint d'étanchéité et de retenue extérieur de la butée de la figure 1.
[Fig. 3] La figure 3 illustre en perspective un détail d'un joint d'étanchéité intérieur de la butée de la figure 1.
[Fig. 4] La figure 4 illustre en demi-coupe axiale une butée tournante de suspension suivant un deuxième exemple mode de réalisation de l'invention.
[Fig. 5] La figure 5 illustre en perspective un détail d'un joint d'étanchéité et de retenue de la butée de la figure 4.
[Fig. 6] La figure 6 illustre en coupe axiale un détail d'une butée tournante de suspension suivant un troisième mode de réalisation de l'invention.
[Fig. 7] La figure 7 illustre en perspective un détail d'un joint d'étanchéité et de retenue de la butée de la figure 6.
[Fig. 8] La figure 8 illustre en perspective un détail d'un joint d'étanchéité et de retenue en variante de la figure 7.

Pour plus de clarté, les éléments identiques ou similaires sont repérés par des signes de référence identiques sur l'ensemble des figures.

### DESCRIPTION DÉTAILLÉE DE MODES DE REALISATION

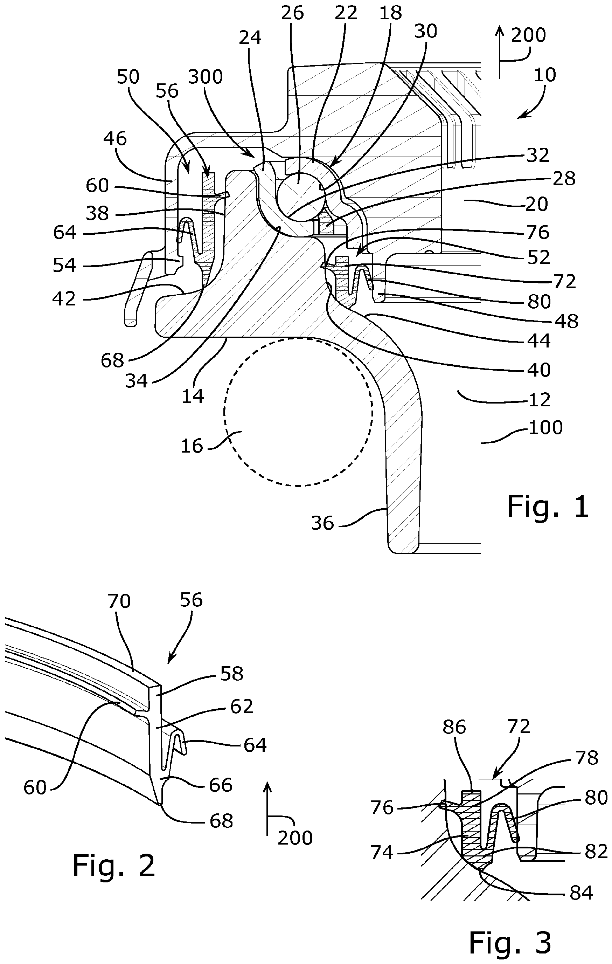

Sur la figure **1** est illustrée une butée tournante **10** pour une jambe de suspension de véhicule, comportant un support inférieur **12** formant une portée d'appui **14** pour une spire supérieure **16** d'un ressort hélicoïdal, un palier **18** supporté par le support inférieur **12** et un couvercle **20** formant avec le support inférieur **12** un volume de logement **300** pour le palier **18.**

Dans cet exemple, et sans que cela ait une valeur limitative, le palier **18** a été illustré comme un palier à roulement comportant une rondelle supérieure **22** en appui sous le couvercle **20,** une rondelle inférieure **24** en appui sur le support inférieur **12** et des corps roulants **26** retenus par une cage de roulement **28** de manière à rouler sur un chemin de guidage supérieur **30** formé sur la rondelle supérieure **22** et un chemin de guidage inférieur **32** formé sur la rondelle inférieure **24.** Le palier **18** permet un mouvement relatif de rotation entre le chemin de guidage supérieur **30** et le chemin de guidage inférieur **32,** donc entre le couvercle **20** et le support inférieur **12,** autour d'un axe de révolution **100** du palier **18,** qui constitue un axe de référence de la butée tournante **10.** Le palier **18** définit également une direction ascendante **200** parallèle à l'axe de référence **100** et telle que la portée d'appui **14** du support inférieur **12** est situé sous le palier **18,** lui-même situé sous le couvercle **20.** Après montage sur le véhicule, l'axe de référence **100** de la butée tournante **10** peut être vertical ou incliné.

La rondelle inférieure **24** est en appui sur une face d'appui **34** du support inférieur **12** tournée axialement en direction ascendante et qui, dans ce mode de réalisation, se trouve positionnée radialement en recouvrement avec la portée d'appui **14** formée sur le support inférieur **12** pour le ressort hélicoïdal **16.** La portée d'appui **14** du support inférieur **12** est tournée axialement à l'opposé de la direction axiale ascendante **200,** et se prolonge par une jupe de centrage **36** faisant saillie axialement vers le bas. Le support inférieur **12** comporte en outre une portée de frettage extérieure **38** annulaire tournée radialement vers l'extérieur et située radialement à l'extérieur de la face d'appui **34,** ainsi qu'une portée de frettage intérieure **40** annulaire tournée radialement vers l'intérieur, située radialement à l'intérieur de la face d'appui **34.** Ces deux portées de frettage **38, 40** sont cylindriques ou tronconique avec un angle de dépouille de préférence inférieur à **5°** (convergeant en direction ascendante pour la portée de frettage extérieure **38** et en direction descendante pour la portée de frettage intérieure **40).** La portée de frettage extérieure **38** est prolongée par une face annulaire de transition extérieure **42** qui s'étend depuis la portée de frettage extérieure **38** radialement vers l'extérieur et est tournée axialement dans la direction ascendante **200.** De façon analogue, la portée de frettage intérieure **40** est prolongée par une face annulaire de transition intérieure **44** qui s'étend depuis la portée de frettage intérieure **40** radialement vers l'intérieur et est tournée axialement dans la direction ascendante **200.**

Le couvercle **20** comporte une jupe extérieure **46** annulaire en regard et à distance de la portée de frettage extérieure **38** et une jupe intérieure **48** annulaire en regard et à distance à de la portée de frettage intérieure **40,** de sorte que sont délimités un passage annulaire extérieur **50** d'accès au volume **300** de logement du palier **18** entre la portée de frettage extérieure **38** et la jupe extérieure **46,** et un passage annulaire intérieur **52** d'accès au volume **300** de logement du palier **18** entre la portée de frettage intérieure **40** et la jupe intérieure **48.** L'une des deux jupes **46, 48** du couvercle **20,** ici la jupe extérieure **46,** peut être pourvue d'une ou plusieurs butées de retenue en saillie radiale depuis la jupe vers le support inférieur, réalisées ici sous forme d'un bourrelet **54** à l'extrémité de la jupe extérieure **46.**

Dans le passage annulaire extérieur **50** est engagé un joint d'étanchéité et de retenue **56,** dit dans la suite joint extérieur, destiné à la fois à protéger le palier **18** contre les pollutions extérieures et à maintenir la cohésion entre le couvercle **20** et le support inférieur **12** avant montage de la butée tournante **10** sur le véhicule. Dans cet exemple de réalisation, le joint extérieur **56,** illustré en détail sur la figure **2****,** est réalisé d'une pièce en matériau synthétique sans insert, et comporte un corps annulaire **58,** une lèvre élastique de frettage **60** faisant saillie depuis une zone de jonction **62** avec le corps **58** vers la portée de frettage extérieure **38** du support inférieur **12,** une lèvre d'étanchéité **64** faisant saillie depuis une zone de jonction **66** avec le corps **58** vers la jupe extérieure **46** du couvercle **20,** venant en contact glissant avec la jupe extérieure **46** du couvercle **20,** et un talon **68** venant en appui élastique contre la face annulaire de transition extérieure **42.**

La lèvre élastique de frettage **60** est ici annulaire, sensiblement tronconique et en interférence dimensionnelle avec la portée de frettage **38,** de sorte à être frettée sur la portée de frettage **38** lors de l'assemblage de la butée tournante **10,** avant la pose du couvercle **20,** par un mouvement d'emmanchement en force en direction descendante sur la portée de frettage **38.** Pour faciliter ce mouvement d'emmanchement et s'opposer à l'extraction du joint extérieur **56,** la lèvre de frettage **60** fait saillie depuis le corps du joint extérieur **56** à la fois radialement vers la portée de frettage extérieure **38** et axialement dans la direction ascendante **200.**

La lèvre d'étanchéité glissante **64** présente une section axiale en V, avec un sommet de V pointant dans la direction axiale ascendante **200,** alors que l'extrémité libre de la lèvre d'étanchéité **64,** en contact avec la jupe extérieure **46** du couvercle, pointe dans la direction axiale descendante, vers la butée formée par le bourrelet **54** à l'extrémité de la jupe extérieure **46.** Cette forme facilite le montage du couvercle **20** par encliquetage sur l'ensemble constitué par le support inférieur **12,** le palier **18** et le joint extérieur **56,** et permet un accrochage élastique qui s'oppose à une séparation du couvercle **20** après montage, et jusqu'à l'assemblage sur le véhicule.

La zone de jonction **66** entre la lèvre d'étanchéité et de retenue **64** et le corps **58** du joint est située axialement à distance de la zone de jonction **62** entre la lèvre de frettage **60** et le corps **58** du joint. Ainsi, les contraintes induites dans le matériau du joint **56** par la déformation de la lèvre de frettage **60** suite au frettage sur la portée de frettage **38** se répartissent dans le corps **58** du joint et ne se traduisent pas par des déformations importantes au niveau de la lèvre d'étanchéité et de retenue **64.** Dans ce premier exemple de réalisation, la zone de jonction **66** entre la lèvre d'étanchéité **64** et le corps **58** du joint est positionnée, par référence à la direction ascendante **200,** au-dessous de la zone de jonction **62** entre la lèvre de frettage **60** et le corps **58** du joint.

Dans cet exemple de réalisation, le talon **68** est situé à une extrémité inférieure du corps **58** du joint et constitue une étanchéité statique avec le support inférieur **12.** L'extrémité supérieure **70** du joint est axialement en saillie par rapport aux lèvres d'étanchéité et de frettage **64, 60,** de sorte que les deux lèvres **64, 60** sont situées l'une et l'autre axialement entièrement entre les deux extrémités axiales **68, 70** opposées du corps **58.** Ceci permet d'assurer qu'en cas de contraintes radiales importantes sur l'une ou l'autre des lèvres, lors du montage ou de l'utilisation, les lèvres **64, 60** viennent se plaquer contre le corps **58** du joint de façon maîtrisée. Par ailleurs, l'extrémité supérieure **70** du joint se trouve radialement en recouvrement avec le talon **68,** de sorte qu'il est possible d'empiler plusieurs joints **56** avant leur montage sans risque d'imbrication, et sans risque de contact des lèvres **64, 60** d'un joint avec des lèvres **64, 60** d'un joint adjacent.

Par ailleurs, on a illustré en détail sur la figure **3** un deuxième joint d'étanchéité **72,** dit dans la suite joint intérieur, situé dans le passage annulaire intérieur **52** délimité par la jupe intérieure **48** du couvercle **20** et la portée de frettage intérieure **40** du support inférieur **12.** Ce joint intérieur **72** a une structure analogue au joint extérieur **56** décrit précédemment, avec un corps **74,** une lèvre élastique de frettage **76** faisant saillie depuis une zone de jonction **78** avec le corps **74** vers la portée de frettage intérieure **40** du support inférieur **12** de manière à être frettée sur la portée de frettage **40,** une lèvre d'étanchéité **80** faisant saillie depuis une zone de jonction **82** avec le corps **78** vers la jupe intérieure **48** du couvercle **20,** pour venir en contact glissant avec la jupe intérieure **48,** et un talon **84** venant en appui élastique contre la face annulaire de transition intérieure **44** pour y constituer une étanchéité statique. Les zones de jonction **78, 82** des deux lèvres **76, 80** avec le corps **74** sont distantes l'une de l'autre et les deux lèvres **76, 80** sont situées axialement entièrement entre les extrémités axiales **84, 86** du corps **74.** Dans cet exemple de réalisation, il n'a pas été donné de fonction de retenue au joint intérieur **72,** mais l'homme du métier comprendra qu'il peut, en variante, prévoir à l'extrémité inférieure de la jupe intérieure **48** un bourrelet faisant saillie radialement vers la portée de frettage intérieure **40,** afin de réaliser un accrochage élastique du couvercle **20** par rapport au sous-ensemble constitué par le support inférieur **12** et le joint intérieur **72.** Ainsi, suivant les besoins, il est possible de réaliser la fonction de retenue sur un seul des deux joints, extérieur **56** ou intérieur **72,** ou sur les deux.

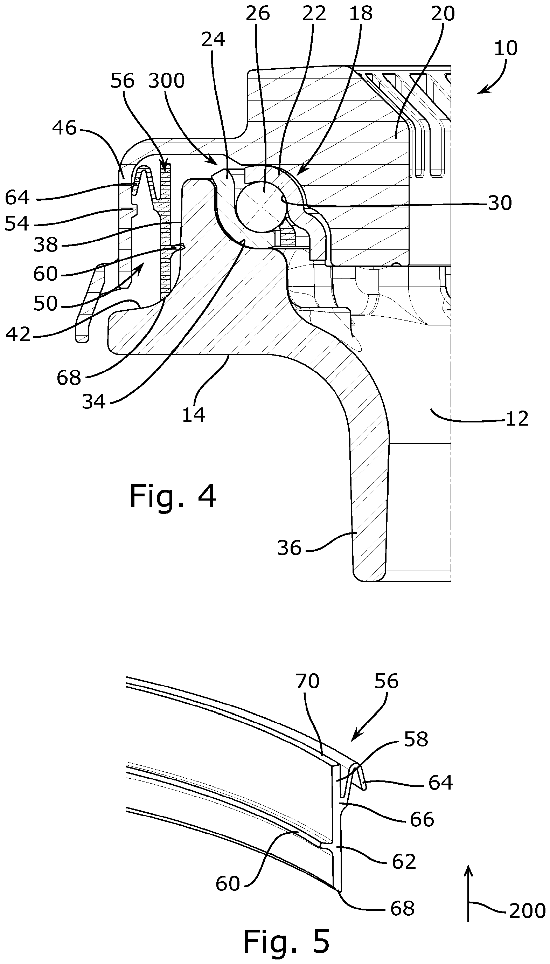

L'exemple de réalisation des figures **4** et **5** diffère du précédent d'une part par l'absence de joint intérieur, et d'autre part par la structure du joint extérieur **56,** dont la zone de jonction **66** entre la lèvre d'étanchéité **64** et le corps **58** est positionnée, par référence à la direction ascendante **200,** à distance au-dessus de la zone de jonction **62** entre la lèvre de frettage **60** et le corps **56.** La position du bourrelet **54** servant de butée a également été décalée pour garder le jeu souhaité avec la lèvre d'étanchéité et de retenue **64.**

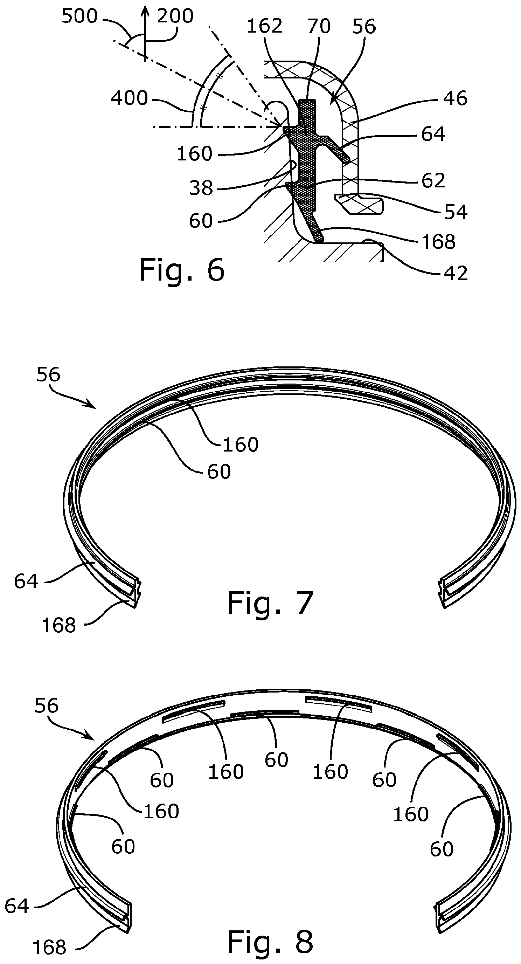

L'exemple de réalisation des figures **6** et **7** diffère des précédents par la structure du joint extérieur **56.** On constate des variations sur la forme de la lèvre d'étanchéité **64,** qui est sensiblement tronconique, et le remplacement du talon d'étanchéité statique par une lèvre élastique **168** en appui contre la face annulaire de transition **42.** Par ailleurs, le frettage du joint extérieur **56** sur la portée de frettage extérieure **38** est réalisé par deux lèvres annulaires de frettage **60, 160** disposées axialement à distance l'une de l'autre.

Comme illustré en détail sur la figure **6****,** chacune des deux les lèvres de frettage **60, 160** présente une extrémité libre formant, en coupe axiale et avant le frettage sur la portée de frettage, un sommet d'angle vif **400** supérieur à 20°, de préférence supérieur à 70° et inférieur à 90°, de préférence inférieur à 80°, le sommet ayant, en coupe axiale, une bissectrice faisant un angle **500** de préférence supérieur à 10°, de préférence supérieur à 30° avec la direction axiale ascendante **200.**

Une première des deux lèvres de frettage **60** présente une zone de jonction **62** avec le corps **58** du joint, qui est située à distance en dessous de la zone de jonction **66** de la lèvre d'étanchéité **64** avec le corps **58** du joint. L'extrémité libre de la lèvre d'étanchéité **64,** en contact glissant ou incertain avec la jupe annulaire **46** du couvercle, est située axialement entre une zone de contact de frettage entre la première lèvre de frettage **60** et la portée de frettage **38** et une zone de contact de frettage entre la deuxième lèvre de frettage **160** et la portée de frettage **38.**

Le joint d'étanchéité ainsi obtenu présente d'excellentes caractéristiques en termes de de tenue mécanique du frettage. Toutefois, le moulage du joint dans un moule dont les pièces sont mobiles en translation parallèlement à l'axe de révolution du joint est entravé par la présence de formes en contredépouille.

La variante de réalisation de la figure **8** offre une solution à ce problème, en prévoyant non plus deux lèvres de frettages annulaires, mais deux ensembles de plusieurs lèvres de frettage, à savoir un premier ensemble constituant une première rangée de N premières lèvres **60,** où N est un nombre entier supérieur ou égal à 2, et de préférence supérieur ou égal à 3, cette première rangée présentant une symétrie de révolution d'ordre N autour de l'axe de référence, et un deuxième ensemble constituant une deuxième rangée de N deuxième lèvres **160,** présentant également une symétrie de révolution d'ordre N autour de l'axe de référence, et décalées par rapport aux premières lèvres **60** de manière à ce qu'il n'y ait pas de superposition entre les premières et les deuxième lèvres, par exemple d'un angle égal à 360°/(2N).

Les exemples représentés sur les figures et discutés ci-dessus ne sont donnés qu'à titre illustratif. D'autres modes de réalisation peuvent être envisagés, notamment en combinant les caractéristiques des différents exemples de réalisation illustrés. On peut notamment prévoir de remplacer la lèvre de frettage annulaire **60, 76** des exemples de réalisation des figures **1** à **5** par un ensemble de lèvres de frettage constituant une rangée similaire à ce qui est illustré sur la figure **8****.** Le profil de lèvre de frettage **60, 160** illustré sur la figure **6** peut être adopté pour tous les exemples de réalisation. Ce qui est décrit pour un joint d'étanchéité et de retenu peut être adapté à un joint n'ayant que la fonction d'étanchéité. Le joint d'étanchéité **56, 72** peut être en contact glissant permanent avec la jupe annulaire **46, 48** associée, ou en contact glissant intermittent, en fonction de l'amplitude et de la direction des efforts appliqués à la butée tournante de suspension. Il peut être également envisagé que le joint d'étanchéité **56, 72** ne soit pas en contact glissant avec la jupe annulaire associée **46, 48** dans les conditions normales de fonctionnement, l'étanchéité étant assurée dans cette hypothèse par le labyrinthe constitué entre la jupe annulaire **46, 48** et la zone du joint d'étanchéité **56, 72** qui lui fait directement face. Ce qui est décrit pour un joint extérieur peut être transposé à un joint intérieur et réciproquement. Par ailleurs, le palier **18** peut être de tout type, à roulement ou lisse, et les chemins de guidage **30, 32** peuvent être réalisés sur des rondelles rapportées **22, 24** ou directement sur le couvercle **20** et le support inférieur **12.** Le bourrelet annulaire **54** peut être remplacé par une ou plusieurs butées en saillie radialement vers la portée de frettage, ces butées étant réparties sur la circonférence de la jupe concernée **46, 48.** Pour accentuer le découplage mécanique entre lèvre(s) de frettage **60, 160** et lèvre d'étanchéité **64, 80,** il est possible de prévoir que le joint d'étanchéité **56, 72** soit pourvue d'une armature annulaire rigide, en matériau plus rigide que les lèvres.

## Revendications

1. Butée tournante de suspension (10) pour une jambe de suspension de véhicule, la butée tournante de suspension (10) comportant :
- un palier (18) définissant un axe de référence (100) et une direction axiale ascendante (200) de la butée tournante (10),
- un support inférieur (12) formant une portée d'appui (14) tournée axialement à l'opposé de la direction axiale ascendante (200) pour venir en appui contre une spire supérieure (16) de ressort hélicoïdal, et une portée de frettage (38, 40) annulaire tournée radialement dans une direction radiale de référence,
- un couvercle (20) formant avec le support inférieur (12) un volume annulaire (300) pour le palier (18), le couvercle (20) comportant une jupe annulaire (46, 48) s'étendant axialement en regard et à distance de la portée de frettage (38, 40),
- un joint d'étanchéité (56, 72), monté sur la portée de frettage (38, 40) du support inférieur (12), présentant un corps (58, 74) et au moins une lèvre d'étanchéité (64, 80) annulaire en saillie depuis le corps (58, 74) dans la direction radiale de référence, vers la jupe annulaire (46, 48),
**caractérisée en ce que** le joint d'étanchéité (56, 72) présente au moins un premier ensemble d'une ou plusieurs premières lèvres de frettage (60, 76) élastiques faisant saillie depuis le corps (58, 74) vers la portée de frettage (38, 40) et frettées sur la portée de frettage (38, 40).

2. Butée tournante (10) de suspension selon la revendication 1, **caractérisée en ce que** la ou les premières lèvres de frettage (60, 76) font saillie depuis une zone de jonction (62, 78) avec le corps (58, 74), située axialement à distance d'une zone de jonction (66, 82) de la lèvre d'étanchéité (64, 80) avec le corps, de préférence dans une direction axiale opposée à la direction axiale ascendante (200).

3. Butée tournante (10) de suspension selon l'une quelconque des revendications précédentes, **caractérisée en ce que** la ou les premières lèvres de frettage (60, 76) font saillie depuis le corps (58, 74) radialement dans une direction radiale opposée à la direction radiale de référence et axialement dans la direction ascendante (200).

4. Butée tournante (10) de suspension selon l'une quelconque des revendications précédentes, **caractérisée en ce que** la ou les premières lèvres de frettage (60, 76) ont une extrémité libre formant, en coupe axiale, un sommet d'angle (400) vif supérieur à 20°, de préférence supérieur à 70° et inférieur à 90°, de préférence inférieur à 80°, le sommet ayant, en coupe axiale, une bissectrice faisant un angle (500) de préférence supérieur à 10°, de préférence supérieur à 30° avec la direction axiale ascendante (200).

5. Butée tournante (10) de suspension selon l'une quelconque des revendications précédentes, **caractérisée en ce que** le couvercle (20) comporte au moins une butée de retenue (54) faisant saillie depuis la jupe annulaire (46) dans une direction radiale opposée à la direction radiale de référence, la lèvre d'étanchéité (64, 80) étant en partie en recouvrement radial avec la butée de retenue (54), à distance de la butée de retenue (54) dans la direction axiale ascendante.

6. Butée tournante (10) de suspension selon l'une quelconque des revendications précédentes, **caractérisée en ce que** la lèvre d'étanchéité (64, 80) présente une section axiale en V, avec un sommet de V pointant dans la direction axiale ascendante (200).

7. Butée tournante (10) de suspension selon l'une quelconque des revendications précédentes, **caractérisée en ce que** le corps (58, 74) présente deux faces d'extrémité axiale opposées (68, 70, 84, 86), de préférence annulaires, de préférence en recouvrement radial l'une avec l'autre, la lèvre d'étanchéité (64, 80) étant de préférence située axialement entièrement entre les deux extrémités axiales opposées (68, 70, 84, 86) du corps (58, 74).

8. Butée tournante (10) de suspension selon l'une quelconque des revendications précédentes, **caractérisée en ce que** le support inférieur (12) est monobloc en matériau métallique léger.

9. Butée tournante (10) de suspension selon l'une quelconque des revendications précédentes, **caractérisée en ce que** la portée de frettage (38, 40) présente une enveloppe cylindrique ou substantiellement cylindrique.

10. Butée tournante (10) de suspension selon l'une quelconque des revendications précédentes, **caractérisée en ce que** le premier ensemble d'une ou plusieurs premières lèvres de frettage (60, 76) est constitué d'une première lèvre élastique de frettage annulaire (60, 76) ou d'une rangée de N premières lèvres (60, 76) présentant une symétrie de révolution d'ordre N autour de l'axe de référence, où N est un nombre entier supérieur ou égal à 2, et de préférence supérieur ou égal à 3.

11. Butée tournante (10) de suspension selon l'une quelconque des revendications précédentes, **caractérisée en ce que** le joint d'étanchéité (56, 72) comporte au moins un deuxième ensemble d'une ou plusieurs deuxièmes lèvres de frettage (160), situées axialement à distance de la ou des premières lèvres de frettage (60) du premier ensemble, la lèvre d'étanchéité (64) ayant de préférence une zone annulaire de contact glissant ou incertain avec la jupe annulaire du couvercle, située axialement entre une zone de contact de frettage entre la ou les premières lèvres de frettage (60) et la portée de frettage (38) et une zone de contact de frettage entre la ou les deuxièmes lèvres de frettage (160) et la portée de frettage (38).

12. Butée tournante (10) de suspension selon l'une quelconque des revendications 12 à 13, **caractérisée en ce que** le premier ensemble est constitué de plusieurs premières lèvres de frettage (60) réparties sur une même première circonférence du joint d'étanchéité (56), le deuxième ensemble est constitué de plusieurs deuxièmes lèvres de frettage (160) réparties sur une même deuxième circonférence du joint d'étanchéité (56), et les deuxièmes lèvres de frettage (160) sont sans recouvrement avec les premières lèvres de frettage (60).

13. Butée tournante (10) de suspension selon l'une quelconque des revendications précédentes, **caractérisée en ce que** le support inférieur (12) comporte une face annulaire de transition (42, 44) s'étendant depuis la portée de frettage (38, 40) radialement dans la direction radiale de référence et tournée axialement dans la direction ascendante (200), le joint d'étanchéité (56, 72) étant de préférence en appui annulaire étanche contre la face de transition (42, 44), de préférence par une lèvre d'étanchéité statique (68) ou un talon d'étanchéité statique (68, 84).

14. Butée tournante (10) de suspension selon l'une quelconque des revendications précédentes, **caractérisée en ce que** la lèvre d'étanchéité (64, 80) est en contact glissant avec la jupe annulaire (46, 48).

15. Butée tournante (10) de suspension selon l'une quelconque des revendications précédentes, **caractérisée en ce que** :
- la direction radiale de référence est tournée radialement vers l'extérieur, la jupe (46) étant de préférence positionnée radialement à l'extérieur du palier (18), ou
- la direction radiale de référence est tournée radialement vers l'intérieur, la jupe (48) étant de préférence positionnée radialement à l'intérieur du palier (18).

## Patentansprüche

1. Drehbarer Federungsanschlag (10) für ein Fahrzeugfederbein, wobei der drehbare Federungsanschlag (10) Folgendes umfasst:
- ein Lager (18), das eine Bezugsachse (100) und eine ansteigende Axialrichtung (200) des drehbaren Anschlags (10) definiert,
- eine untere Stütze (12), die eine Auflagefläche (14), die axial entgegengesetzt zur ansteigenden Axialrichtung (200) gewandt ist, sodass sie mit einer oberen Windung (16) einer Schraubenfeder zur Anlage kommt, und einen ringförmigen Schrumpfsitz (38, 40), der radial in eine radiale Bezugsrichtung gewandt ist, bildet,
- eine Abdeckung (20), die mit der unteren Stütze (12) ein ringförmiges Volumen (300) für das Lager (18) bildet, wobei die Abdeckung (20) eine ringförmige Schürze (46, 48) umfasst, die sich gegenüber dem Schrumpfsitz (38, 40) und in einem Abstand davon axial erstreckt,
- eine Dichtung (56, 72), die an dem Schrumpfsitz (38, 40) der unteren Stütze (12) montiert ist und einen Körper (58, 74) und mindestens eine ringförmige Dichtlippe (64, 80) aufweist, die von dem Körper (58, 74) in der radialen Bezugsrichtung zur ringförmigen Schürze (46, 48) hin absteht,
**dadurch gekennzeichnet, dass** die Dichtung (56, 72) mindestens einen ersten Satz einer oder mehrerer erster elastischer Schrumpflippen (60, 76) aufweist, die vom Körper (58, 74) zum Schrumpfsitz (38, 40) hin abstehen und am Schrumpfsitz (38, 40) aufgeschrumpft sind.

2. Drehbarer Federungsanschlag (10) nach Anspruch 1,
**dadurch gekennzeichnet, dass** die erste(n) Schrumpflippe(n) (60, 76) von einer Verbindungszone (62, 78) mit dem Körper (58, 74) abstehen, die axial von einer Verbindungszone (66, 82) der Dichtlippe (64, 80) mit dem Körper beabstandet ist, vorzugsweise in einer der ansteigenden Axialrichtung (200) entgegengesetzten axialen Richtung.

3. Drehbarer Federungsanschlag (10) nach einem der vorstehenden Ansprüche, **dadurch gekennzeichnet, dass** die erste(n) Schrumpflippe(n) (60, 76) vom Körper (58, 74) radial in einer zur radialen Bezugsrichtung entgegengesetzten radialen Richtung und axial in der ansteigenden Richtung (200) abstehen.

4. Drehbarer Federungsanschlag (10) nach einem der vorstehenden Ansprüche, **dadurch gekennzeichnet, dass** die erste(n) Schrumpflippe(n) (60, 76) ein freies Ende aufweisen, das im Axialschnitt einen scharfen Scheitelwinkel (400) größer als 20° bildet, vorzugsweise größer als 70° und kleiner als 90°, vorzugsweise kleiner als 80°, wobei der Scheitelpunkt im Axialschnitt eine Winkelhalbierende aufweist, die mit der ansteigenden Axialrichtung (200) einen Winkel (500) von vorzugsweise größer als 10°, vorzugsweise größer als 30° bildet.

5. Drehbarer Federungsanschlag (10) nach einem der vorstehenden Ansprüche, **dadurch gekennzeichnet, dass** die Abdeckung (20) mindestens einen Halteanschlag (54) aufweist, der von der ringförmigen Schürze (46) in einer der radialen Bezugsrichtung entgegengesetzten radialen Richtung absteht, wobei die Dichtlippe (64, 80) teilweise in radialer Überdeckung mit dem Halteanschlag (54) steht und dabei in ansteigender Axialrichtung einen Abstand zum Halteanschlag (54) aufweist.

6. Drehbarer Federungsanschlag (10) nach einem der vorstehenden Ansprüche, **dadurch gekennzeichnet, dass** die Dichtlippe (64, 80) einen axialen V-förmigen Abschnitt aufweist, wobei der Scheitelpunkt des V in die ansteigende Axialrichtung (200) zeigt.

7. Drehbarer Federungsanschlag (10) nach einem der vorstehenden Ansprüche, **dadurch gekennzeichnet, dass** der Körper (58, 74) zwei einander gegenüberliegende axiale Endflächen (68, 70, 84, 86) aufweist, die vorzugsweise ringförmig sind und sich vorzugsweise radial gegenseitig überlappen, wobei die Dichtlippe (64, 80) vorzugsweise axial vollständig zwischen den beiden einander gegenüberliegenden axialen Enden (68, 70, 84, 86) des Körpers (58, 74) liegt.

8. Drehbarer Federungsanschlag (10) nach einem der vorstehenden Ansprüche, **dadurch gekennzeichnet, dass** die untere Stütze (12) aus einem Stück Leichtmetall besteht.

9. Drehbarer Federungsanschlag (10) nach einem der vorstehenden Ansprüche, **dadurch gekennzeichnet, dass** der Schrumpfsitz (38, 40) eine zylindrische oder im Wesentlichen zylindrische Hülle aufweist.

10. Drehbarer Federungsanschlag (10) nach einem der vorstehenden Ansprüche, **dadurch gekennzeichnet, dass** der erste Satz einer oder mehrerer erster Schrumpflippen (60, 76) aus einer ersten ringförmigen elastischen Schrumpflippe (60, 76) oder einer Reihe von N ersten Lippen (60, 76) besteht, die eine Rotationssymmetrie der Ordnung N um die Bezugsachse aufweisen, wobei N eine ganze Zahl größer oder gleich 2 und vorzugsweise größer oder gleich 3 ist.

11. Drehbarer Federungsanschlag (10) nach einem der vorstehenden Ansprüche, **dadurch gekennzeichnet, dass** die Dichtung (56, 72) mindestens einen zweiten Satz einer oder mehrerer zweiter Schrumpflippen (160) umfasst, die axial im Abstand von der oder den ersten Schrumpflippen (60) des ersten Satzes angeordnet sind, wobei die Dichtlippe (64) vorzugsweise eine ringförmige Zone in gleitendem oder unsicherem Kontakt mit der ringförmigen Schürze der Abdeckung aufweist, die axial zwischen einer Zone des Schrumpfkontakts zwischen der oder den ersten Schrumpflippen (60) und dem Schrumpfsitz (38) und einer Zone des Schrumpfkontakts zwischen der oder den zweiten Schrumpflippen (160) und dem Schrumpfsitz (38) angeordnet ist.

12. Drehbarer Federungsanschlag (10) nach einem der Ansprüche 12 bis 13, **dadurch gekennzeichnet, dass** der erste Satz aus mehreren ersten Schrumpflippen (60) besteht, die über denselben ersten Umfang der Dichtung (56) verteilt sind, der zweite Satz aus mehreren zweite Schrumpflippen (160) besteht, die über denselben zweiten Umfang der Dichtung (56) verteilt sind und die zweiten Schrumpflippen (160) sich nicht mit den ersten Schrumpflippen (60) überlappen.

13. Drehbarer Federungsanschlag (10) nach einem der vorstehenden Ansprüche, **dadurch gekennzeichnet, dass** die untere Stütze (12) eine ringförmige Übergangsfläche (42, 44) aufweist, die sich von dem Schrumpfsitz (38, 40) radial in der radialen Bezugsrichtung erstreckt und axial in der ansteigenden Richtung (200) gewandt ist, wobei die Dichtung (56, 72) vorzugsweise ringförmig an der Übergangsfläche (42, 44) dichtend anliegt, vorzugsweise durch eine statische Dichtlippe (68) oder einen statischen Dichtabsatz (68, 84).

14. Drehbarer Federungsanschlag (10) nach einem der vorstehenden Ansprüche, **dadurch gekennzeichnet, dass** die Dichtlippe (64, 80) in Gleitkontakt mit der ringförmigen Schürze (46, 48) steht.

15. Drehbarer Federungsanschlag (10) nach einem der vorstehenden Ansprüche, **dadurch gekennzeichnet, dass:**
- die radiale Bezugsrichtung radial nach außen gewandt ist, wobei die Schürze (46) vorzugsweise radial außerhalb des Lagers (18) positioniert ist, oder
- die radiale Bezugsrichtung radial nach innen gewandt ist, wobei die Schürze (48) vorzugsweise radial innerhalb des Lagers (18) positioniert ist.

## Claims

1. Rotary suspension stop (10) for a vehicle suspension strut, the rotary suspension stop (10) comprising:
- a bearing (18) defining a reference axis (100) and an upward axial direction (200) of the rotary stop (10),
- a lower support (12) forming a bearing surface (14) turned axially opposite the upward axial direction (200) to bear against an upper turn (16) of a helical spring, and an annular shrink-fitting surface (38, 40) turned radially in a radial reference direction,
- a cover (20) forming, with the lower support (12), an annular volume (300) for the bearing (18), the cover (20) comprising an annular skirt (46, 48) extending axially facing and at a distance from the shrink-fitting surface (38, 40),
- a seal (56, 72) mounted on the shrink-fitting surface (38, 40) of the lower support (12), which seal has a body (58, 74) and at least one annular sealing lip (64, 80) projecting from the body (58, 74) in the radial reference direction, toward the annular skirt (46, 48),
**characterized in that** the seal (56, 72) has at least a first set of one or more first elastic shrink-fit lips (60, 76) projecting from the body (58, 74) toward the shrink-fitting surface (38, 40) and shrinking on the shrink-fitting surface (38, 40).

2. Rotary suspension stop (10) according to claim 1, **characterized in that** the first shrink-fit lip(s) (60, 76) project from a junction zone (62, 78) with the body (58, 74), which zone is located axially at a distance from a junction zone (66, 82) of the sealing lip (64, 80) with the body, preferably in an axial direction opposite the upward axial direction (200).

3. Rotary suspension stop (10) according to one of the preceding claims, **characterized in that** the first shrink-fit lip(s) (60, 76) project from the body (58, 74) radially in a radial direction opposite the radial reference direction and axially in the upward direction (200).

4. Rotary suspension stop (10) according to one of the preceding claims, **characterized in that** the first shrink-fit lip(s) (60, 76) have a free end forming, in axial section, a vertex (400) with a sharp angle greater than 20°, preferably greater than 70° and less than 90°, preferably less than 80°, the vertex having, in axial section, a bisector forming an angle (500) preferably greater than 10°, preferably greater than 30° with the upward axial direction (200).

5. Rotary suspension stop (10) according to one of the preceding claims, **characterized in that** the cover (20) comprises at least one retaining stop (54) projecting from the annular skirt (46) in a radial direction opposite the radial reference direction, the sealing lip (64, 80) being partly in radial overlap with the retaining stop (54), at a distance from the retaining stop (54) in the upward axial direction.

6. Rotary suspension stop (10) according to one of the preceding claims, **characterized in that** the sealing lip (64, 80) has a V-shaped axial section, with a vertex of the V pointing in the upward axial direction (200).

7. Rotary suspension stop (10) according to one of the preceding claims, **characterized in that** the body (58, 74) has two opposite axial end faces (68, 70, 84, 86), which are preferably annular and preferably radially overlap with each other, the sealing lip (64, 80) preferably being located entirely axially between the two opposite axial ends (68, 70, 84, 86) of the body (58, 74).

8. Rotary suspension stop (10) according to one of the preceding claims, **characterized in that** the lower support (12) is a single piece of light metal material.

9. Rotary suspension stop (10) according to one of the preceding claims, **characterized in that** the shrink-fitting surface (38, 40) has a cylindrical or substantially cylindrical envelope.

10. Rotary suspension stop (10) according to one of the preceding claims, **characterized in that** the first set of one or more first shrink-fit lips (60, 76) consists of a first annular elastic shrink-fit lip (60, 76) or of a row of N first lips (60, 76) having a symmetry of revolution of order N about the reference axis, where N is an integer greater than or equal to 2, and preferably greater than or equal to 3.

11. Rotary suspension stop (10) according to one of the preceding claims, **characterized in that** the seal (56, 72) comprises at least a second set of one or more second shrink-fit lips (160), located axially at a distance from the first shrink-fit lip(s) (60) of the first set, the sealing lip (64) preferably having an annular zone for sliding or uncertain contact with the annular skirt of the cover, which zone is located axially between a zone of shrink-fit contact between the first shrink-fit lip(s) (60) and the shrink-fitting surface (38) and a zone of shrink-fit contact between the second shrink-fit lip(s) (160) and the shrink-fitting surface (38).

12. Rotary suspension stop (10) according to one of claims 12 to 13, **characterized in that** the first set consists of a plurality of first shrink-fit lips (60) distributed over a same first circumference of the seal (56), the second set consists of a plurality of second shrink-fit lips (160) distributed over a same second circumference of the seal (56), and the second shrink-fit lips (160) do not overlap with the first shrink-fit lips (60).

13. Rotary suspension stop (10) according to one of the preceding claims, **characterized in that** the lower support (12) comprises an annular transition face (42, 44) extending radially from the shrink-fitting surface (38, 40) in the radial reference direction and turned axially in the upward direction (200), the seal (56, 72) preferably being in sealed annular bearing against the transition face (42, 44), preferably by a static sealing lip (68) or a static sealing heel (68, 84).

14. Rotary suspension stop (10) according to one of the preceding claims, **characterized in that** the sealing lip (64, 80) is in sliding contact with the annular skirt (46, 48).

15. Rotary suspension stop (10) according to one of the preceding claims, **characterized in that:**
- the radial reference direction is turned radially outward, the skirt (46) preferably being positioned radially outside the bearing (18), or
- the radial reference direction is turned radially inward, the skirt (48) preferably being positioned radially inside the bearing (18).
